# EUROPÄISCHE PATENTSCHRIFT

(11) **EP 0 805 544 B1**
(45) Veröffentlichungstag und Bekanntmachung des Hinweises auf die Patenterteilung: **20.09.2000**
(21) Anmeldenummer: 97107028.9
(22) Anmeldetag: 28.04.1997
(51) Int. Cl.: H02K 9/04, H02K 5/26, H02K 16/00, F04D 25/06

(54) **Mehrmotorenantrieb**
Multiple-motor drive
Dispositif d'entraînement à plusieurs moteurs

(30) Priorität: 02.05.1996 DE 19617612
(43) Veröffentlichungstag der Anmeldung: 05.11.1997
(73) Patentinhaber: SIEMENS AKTIENGESELLSCHAFT, 80333 München (DE)
(72) Erfinder: Wagner, Herbert, Dipl.-Ing. (FH), 97616 Bad Neustadt (DE); Werbinek, Thomas, Dipl.-Ing. (FH), 97529 Sulzheim (DE)

(56) Entgegenhaltungen:
- EP-A- 0 206 009
- DE-A- 3 234 673
- US-A- 3 999 715
- US-A- 4 847 513

## Beschreibung

Die Erfindung betrifft einen Mehrmotorenantrieb gemäß dem Oberbegriff des Anspruches 1.

Es gibt in der Technik, beispielsweise in der Textilindustrie, Anwendungsfälle, bei denen ein Mehrmotorenantrieb zu dem Zweck vorgesehen ist, daß während des Betriebes eines oder einzelner Motoren ein anderer oder andere Motoren stillgesetzt werden können, um entweder Revisionen an den Motoren vornehmen oder auch die von den Motoren angetriebenen Arbeitsstationen neu bestücken zu können. Die Antriebsmotoren sind üblicherweise mit einem durch einen gesonderten Lüftermotor angetriebenen Lüfter versehen, also fremdbelüftet.

Der Erfindung liegt die Aufgabe zugrunde, den Aufwand für die Kühlung der Motoren des Mehrmotorenantriebes zu vermindern.

Die Lösung dieser Aufgabe gelingt durch die im Kennzeichen des Anspruches 1 angegebenen Merkmale. Durch diese Gestaltung des Mehrmotorenantriebes können alle Motoren ohne einen eigenen Lüfter ausgeführt werden. Es braucht nur eine der Anzahl der jeweils gleichzeitig in Betrieb befindlichen Motoren entsprechende Anzahl von Fremdlüftern vorgesehen zu werden. Diese Fremdlüfter werden dann strömungsmäßig jeweils mit den in Betrieb befindlichen Motoren gekoppelt.

Gemäß einer Ausgestaltung der Erfindung besteht eine vorteilhafte Ausführungsform darin, daß die Motoren auf einer verstellbaren Tragvorrichtung angeordnet und durch Verstellen dieser Tragvorrichtung jeweils in ihre Betriebs- und in ihre Außerbetriebsstellung bringbar sind, wobei der Tragvorrichtung gegenüberliegend eine der Anzahl der jeweils gleichzeitig in Betrieb befindlichen Motoren entsprechende Anzahl von Konsolen vorgesehen ist, auf denen der Fremdlüfter gegenüber der Tragvorrichtung axial verschiebbar angeordnet ist. Bei dieser Ausführungsform ist die Betriebsstellung bzw. die Außerbetriebsstellung des Motors bzw. der Motoren jeweils durch eine bestimmte räumliche Lage der Motoren gegeben. Damit können die erforderlichen Fremdlüfter jeweils an der dieser räumlichen Lage entsprechenden Stelle angeordnet werden. Die Fremdlüfter müssen dann lediglich strömungsmäßig mit den Motoren gekoppelt werden. Dies geschieht zweckmäßigerweise durch ein axiales Verschieben der Fremdlüfter zu den Motoren hin, so daß der Fremdlüfter mit seiner Lüfterhaube an das Motorgehäuse herangeführt und damit strömungsmäßig mit dem Motor verbunden wird.

Werden bei einem Mehrmotorenantrieb die einzelnen Motoren durch elektrisches Ein- und Ausschalten jeweils in Betrieb und außer Betrieb gesetzt, dann ist es zweckmäßig, daß der bzw. die Fremdlüfter gegenüber den Motoren axial verschiebbar auf einem verstellbaren Traggestell angeordnet ist bzw. sind und durch Verstellen dieses Traggestelles jeweils dem oder den in Betrieb befindlichen Motor bzw. Motoren zuordenbar ist bzw. sind. Somit können die Fremdlüfter bei räumlich fest angeordneten Motoren zu den jeweils in Betrieb befindlichen Motoren hinverschwenkt und mit diesen gekoppelt werden.

Die Anordnung der Motoren auf einer verschwenkbaren Tragplatte ermöglicht auf einfache Weise das Verbringen der Motoren in ihre Betriebs- und in ihre Außerbetriebsstellung.

Anhand eines in der Zeichnung dargestellten Ausführungsbeispieles wird die Erfindung nachfolgend noch näher beschrieben.
Es zeigt:
- FIG 1: eine Draufsicht eines Mehrmotorenantriebes,
- FIG 2: eine Seitenansicht des Mehrmotorenantriebes nach Fig.1.

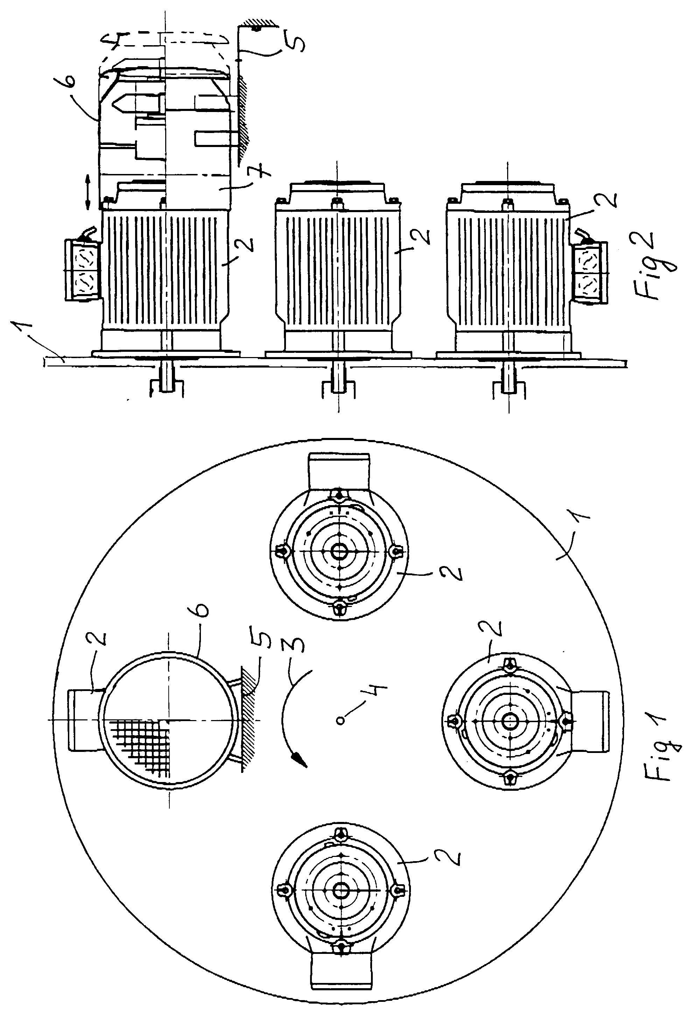

Mit 1 ist eine Tragplatte bezeichnet, auf der gemäß der Darstellung in Fig.1, vier Motoren 2 gleichmäßig über deren Umfang verteilt angeordnet sind. Die Tragplatte 1 kann auch mit zwei oder drei bzw. auch mit mehr als vier Motoren 2 bestückt sein. Durch eine Drehpfeil 3 ist die Verschwenkbarkeit der Tragplatte 1 angedeutet.

Wie insbesondere aus der Fig.2 zu ersehen ist, ist gegenüber der Tragplatte 1 axial beabstandet eine Konsole 5 angebracht, auf der ein Fremdlüfter 6 axial verschiebbar angeordnet ist. Bei dem dargestellten Ausführungsbeispiel wird angenommen, daß die Motoren 2 durch Verschwenken der Tragplatte 1 in ihre Betriebsstellung bringbar sind. Gemäß dem dargestellten Ausführungsbeispiel ist die Betriebsstellung für den einzelnen Motor 2 jeweils dann gegeben, wenn er durch Verschwenken der Tragplatte 1 in der obersten Position steht. Dieser Stellung ist auch der Fremdlüfter 6 zugeordnet. Die Konsole 5 ist gegenüber der Tragplatte 1 so angeordnet und ausgerichtet, daß der Fremdlüfter 6 durch entsprechendes axiales Verschieben auf der Konsole 5 mit seiner Lüfterhaube 7 an der Stirnseite des sich in der obersten Position befindlichen Motors 2 zur Anlage kommt. Damit ist der Fremdlüfter 6 strömungsmäßig mit dem in Betrieb befindlichen Motor 2 gekoppelt, wie dies in der mit vollem Linienzug dargestellten Stellung des Fremdlüfters der Fall ist. Durch den gestrichelten Linienzug ist die von dem Motor 2 abgekoppelte Stellung des Fremdlüfters 6 angedeutet.

Durch die neue Anordnung wird der Tatsache Rechnung getragen, daß die nicht in Betrieb befindlichen Motoren keine Kühlung benötigen und daher der Fremdlüfter eingespart werden kann.

Die Antriebsanordnung kann auch so ausgeführt werden, daß mehrere Motoren gleichzeitig in Betrieb sind, z.B. der in der obersten und der in der untersten Position befindliche Motor 2. Dementsprechend ist dann auch diesen Positionen jeweils ein Fremdlüfter 6 zugeordnet.

Es besteht auch die Möglichkeit, daß die Motoren 2 stets in ihren Positionen verbleiben und durch Ein- und Ausschalten in und außer Betrieb gesetzt werden. In diesem Falle können die Fremdlüfter 6 auf einem Traggestell angeordnet und durch Verstellen desselben jeweils mit den in Betrieb befindlichen Motoren 2 gekoppelt werden.

## Patentansprüche

1. Mehrmotorenantrieb, bei dem die einzelnen Motoren (2) abwechselnd zeitlich nacheinander betreibbar und mittels Fremdlüfter (6) gekühlt sind,
**dadurch gekennzeichnet,**
daß nur eine der Anzahl der jeweils gleichzeitig in Betrieb befindlichen Motoren (2) entsprechende Anzahl von Fremdlüftern (6) vorgesehen ist, wobei der oder die Fremdlüfter (6) strömungsmäßig jeweils mit dem oder den in Betrieb befindlichen Motor (2) oder Motoren (2) koppelbar ist bzw. sind.

2. Mehrmotorenantrieb nach Anspruch 1,
**dadurch gekennzeichnet,**
daß die Motoren (2) auf einer verstellbaren Tragvorrichtung (1) angeordnet und durch Verstellen dieser Tragvorrichtung (1) jeweils in ihre Betriebs- und in ihre Außerbetriebsstellung bringbar sind, wobei der Tragvorrichtung (1) gegenüberliegend eine der Anzahl der jeweils gleichzeitig in Betrieb befindlichen Motoren (2) entsprechende Anzahl von Konsolen (5) vorgesehen ist, auf denen der Fremdlüfter (6) gegenüber der Tragvorrichtung (1) axial verschiebbar angeordnet ist.

3. Mehrmotorenantrieb nach Anspruch 1,
**dadurch gekennzeichnet,**
daß der bzw. die Fremdlüfter (6) gegenüber den Motoren (2) axial verschiebbar auf einem verstellbaren Traggestell angeordnet ist bzw. sind und durch Verstellen dieses Traggestelles jeweils dem oder den in Betrieb befindlichen Motor bzw. Motoren zuordenbar ist bzw. sind.

4. Mehrmotorenantrieb nach Anspruch 2,
**dadurch gekennzeichnet,**
daß die Motoren (2) auf einer verschwenkbaren Tragplatte (1) angeordnet sind.

## Claims

1. Multi-motor drive, in which the individual motors (2) can be operated by turns temporally one after the other and are cooled by means of separately driven fans (6), characterised in that only a number of separately driven fans (6) corresponding to the number of motors (2) that are in operation at the same time in each case are provided, with the separately driven fan (6) or fans (6) being coupled in terms of flow to the respective motor (2) or motors (2) that is or are in operation.

2. Multi-motor drive according to claim 1,
characterised in that the motors (2) are arranged on an adjustable supporting arrangement (1) and by means of adjustment of this supporting arrangement (1) can in each case be moved into their operating position and into the position in which they are out of operation, with there being provided opposite the supporting arrangement (1) a number of brackets (5) corresponding to the number of motors (2) that are in operation at the same time in each case and on which brackets (5) the separately driven fan (6) is arranged in a manner such that it can be axially displaced in relation to the supporting arrangement (1).

3. Multi-motor drive according to claim 1,
characterised in that the separately driven fan (6) or fans (6) is or are arranged on an adjustable supporting frame in such a way that it or they can be axially displaced in relation to the motors (2) and as a result of adjustment of this supporting frame can be coordinated with the respective motor or motors that is or are in operation.

4. Multi-motor drive according to claim 2,
characterised in that the motors (2) are arranged on a supporting plate (1) that can be swivelled.

## Revendications

1. Dispositif d'entraînement à plusieurs moteurs, dans lequel les moteurs (2) peuvent fonctionner l'un après l'autre dans le temps en alternance et sont refroidis au moyen de ventilateurs (6) séparés,
caractérisé
en ce qu'il n'est prévu qu'un nombre de ventilateurs (6) séparés correspondant au nombre des moteurs (2) se trouvant simultanément en fonctionnement, le ou les ventilateurs (6) séparés pouvant être couplés du point de vue du courant, respectivement au moteur (2) ou aux moteurs (2) se trouvant en fonctionnement.

2. Dispositif d'entraînement à plusieurs moteurs suivant la revendication 1,
caractérisé
en ce que les moteurs (2) sont montés sur un dispositif (1) porteur réglable et peuvent être amenés, en réglant ce dispositif (1) porteur, respectivement en leur position de fonctionnement et leur position de non fonctionnement et il est prévu, en face du dispositif (1) porteur, un nombre de consoles correspondant au nombre des moteurs (2) se trouvant simultanément en fonctionnement, consoles sur lesquelles le ventilateur (6) séparé est monté à coulissement axial par rapport au dispositif (1) porteur.

3. Dispositif d'entraînement à plusieurs moteurs suivant la revendication 1,
caractérisé
en ce que le ventilateur (6) séparé ou les ventilateurs (6) séparés sont montés à coulissement axial par rapport au moteur (2) sur un châssis porteur réglable et peuvent être associés en déplaçant ce châssis porteur respectivement au moteur ou aux moteurs se trouvant en fonctionnement.

4. Dispositif d'entraînement à plusieurs moteurs suivant la revendication 2,
caractérisé
en ce que les moteurs sont montés sur une plaque (1) porteuse qui peut tourner.
